# EUROPEAN PATENT APPLICATION

(11) **EP 4 418 617 A1**
(43) Date of publication of application: **21.08.2024**
(21) Application number: 23209311.2
(22) Date of filing: 13.11.2023
(51) Int. Cl.: H04L 41/0833, H04L 41/16, G06N 20/00, H04W 24/02, G06N 3/08

(54) **ENERGY EFFICIENCY CONTROL MECHANISM**

(30) Priority: 16.02.2023 IN 202341010374
(71) Applicant: Nokia Solutions and Networks Oy, 02610 Espoo (FI)
(72) Inventor: GAJIC, Borislava, Unterhaching (DE); SUBRAMANYA, Tejas, Munich (DE); LEHMANN, Gerald, Berlin (DE); SWAMINATHAN, Sivaramakrishnan, Bangalore (IN)
(74) Representative: Nokia EPO representatives

(57) **Abstract**

An apparatus for use by a communication network element or communication network function acting as an artificial intelligence, Al, machine learning, ML, management service consumer, the apparatus comprising at least one processing circuitry, and at least one memory for storing instructions that, when executed by the at least one processor, cause the apparatus at least to request an AI/ML energy consumption related parameter from an AI/ML management service producer offering services related to at least one AI/ML entity, to receive, from the AI/ML management service producer, the requested AI/ML energy consumption related parameter, and to process the AI/ML energy consumption related parameter for deriving an energy saving strategy considering the Al/ML energy consumption related parameter.

## Description

### BACKGROUND

### Field

Examples of the disclosure relate to apparatuses, methods, systems, computer programs, computer program products and (non-transitory) computer-readable media usable for providing and conducting measures allowing to increase energy efficiency in a communication network in which artificial intelligence and machine learning components are employed. In particular, examples of the disclosure relate to apparatuses, methods, systems, computer programs, computer program products and (non-transitory) computer-readable media usable for obtaining measurements in a communication network in which artificial intelligence and machine learning components are employed and using the measurements in order to optimize energy efficiency in the communication network when the artificial intelligence and machine learning components are used.

### Background Art

The following description of background art may include insights, discoveries, understandings or disclosures, or associations, together with disclosures not known to the relevant prior art, to at least some examples of embodiments of the present disclosure but provided by the disclosure. Some of such contributions of the disclosure may be specifically pointed out below, whereas other of such contributions of the disclosure will be apparent from the related context.

The following meanings for the abbreviations used in this specification apply:
- 3GPP: 3^{rd} Generation Partnership Project
- 4G: fourth generation
- 5G: fifth generation
- 5GC: 5G core
- AI: artificial intelligence
- CPU: central processing unit
- eNB: E-UTRAN Node B
- FLOP: floating point operation
- gNB: next generation node B
- ID: identification, identifier
- KPI: key performance indicator
- LTE: Long Term Evolution
- LTE-A: LTE Advanced
- MB: mega byte
- MDAS: management data analysis system
- MDT: minimization drive test
- ML: machine learning
- MnS: management service
- NW: network, network side
- NWDAF: network data analytics function
- OAM: operations administration and maintenance
- QoE: quality of experience
- RAN: radio access network
- UE: user equipment
- ULI: user location information
- UPF: user plane function
- WLAN: wireless local area network

### SUMMARY

According to an example of an embodiment, there is provided, for example, an apparatus for use by a communication network element or communication network function acting as an artificial intelligence, Al, machine learning, ML, management service consumer, the apparatus comprising at least one processing circuitry, and at least one memory for storing instructions that, when executed by the at least one processor, cause the apparatus at least to request an AI/ML energy consumption related parameter from an AI/ML management service producer offering services related to at least one AI/ML entity, to receive, from the AI/ML management service producer, the requested AI/ML energy consumption related parameter, and to process the AI/ML energy consumption related parameter for deriving an energy saving strategy considering the AI/ML energy consumption related parameter.

Furthermore, according to an example of an embodiment, there is provided, for example, a method for use in a communication network element or communication network function acting as an artificial intelligence, Al, machine learning, ML, management service consumer, the method comprising requesting an AI/ML energy consumption related parameter from an AI/ML management service producer offering services related to at least one AI/ML entity, receiving, from the AI/ML management service producer, the requested AI/ML energy consumption related parameter, and processing the AI/ML energy consumption related parameter for deriving an energy saving strategy considering the AI/ML energy consumption related parameter.

According to further refinements, these examples may include one or more of the following features:
- the AI/ML energy consumption parameter may be at least one of an AI/ML energy consumption metric or an AI/ML energy consumption profile, wherein AI/ML energy consumption parameter may be related to at least one phase in a lifecycle of an AI/ML entity including a data collection phase, a model training phase, a testing phase and an inference phase;
- the AI/ML energy consumption metric may be expressed in a form of numerator / denominator, wherein the numerator may indicate one of a complexity related value indicating a computational complexity of an AI/ML model, an energy consumption related value indicating an energy consumption of an AI/ML model under predefined operation conditions, or an environmental related value indicating a carbon emission when operating an AI/ML model, and the denominator may indicate one of or a combination of per sample, per entire training process, per Al/ML related performance gain, per network KPI gain, per amount of saved energy, or per inference;
- the AI/ML energy consumption metric may be defined per AI/ML capability including a definition of an object or object types for optimization or control, configuration parameters on an object or object types, and network metrics being optimized, and per AI/ML scope indicating a validity range;
- the AI/ML energy consumption metric may be defined per AI/ML entity;
- the AI/ML energy consumption metric may be defined per managed element or managed entity each comprising one or more AI/ML entities;
- the AI/ML energy consumption metric may be defined separately for AI/ML related signaling concerning at least one of transmission of data to be processed by an AI/ML model, or transmission of data comprising an AI/ML model;
- the AI/ML energy consumption metric may be defined according to a requested energy consumption requirement provided from the consumer to the producer;
- the AI/ML energy consumption profile may indicate an expected energy consumption during at least one phase of the lifecycle of an AI/ML entity and may include at least one of an indication of a complexity of the AI/ML entity, an indication of energy consumption of the AI/ML entity when operated under predefined operation conditions, an indication of an alternative energy saving solution based on an AI/ML model, an amount of data required for inference, an amount of data required for model training purposes, an indication of a required periodicity for re-training of the AI/ML entity, an indication of a requirement for data signaling regarding model training purposes;
- when processing the AI/ML energy consumption related parameter for deriving the energy saving strategy considering the AI/ML energy consumption related parameter, information related to at least one of network performance or user targets may be considered, and it may be decided on at least one of a recommendation regarding activation/deactivation of the AI/ML entity, a recommendation regarding switching over towards another AI/ML based solution based on performance or energy consumption, a recommendation regarding switching over towards a less energy demanding solution being different to an AI/ML based solution, a recommendation is derived regarding switching over towards a more energy demanding solution in order to improve performance of AI/ML solution, and a recommendation regarding a scheduling of a re-training of AI/ML entity;
- when processing the AI/ML energy consumption related parameter for deriving the energy saving strategy considering the AI/ML energy consumption related parameter, information related to network performance may be considered in a tradeoff between an improvement in network performance and an energy consumption when applying the AI/ML entity, or to consider information related to a performance of the AI/ML entity in a tradeoff between AI/ML entity performance improvement and an energy consumption when improving the AI/ML entity;
- there may be sent, to the AI/ML management service producer, at least one of a result of the processing the AI/ML energy consumption related parameter for deriving the energy saving strategy or configuration data for configuring the energy saving strategy at the AI/ML management service producer.

According to an example of an embodiment, there is provided, for example, an apparatus for use by a communication network element or communication network function acting as an artificial intelligence, Al, machine learning, ML, management service producer, the apparatus comprising at least one processing circuitry, and at least one memory for storing instructions that, when executed by the at least one processor, cause the apparatus at least to receive a request for an AI/ML energy consumption related parameter from an AI/ML management service consumer, to determine the requested AI/ML energy consumption related parameter for at least one ML entity of AI/ML management service producer, and to send the determined AI/ML energy consumption related parameter to the AI/ML management service consumer.

Furthermore, according to an example of an embodiment, there is provided, for example, a method for use in a communication network element or communication network function acting as an artificial intelligence, Al, machine learning, ML, management service producer, the method comprising receiving a request for an AI/ML energy consumption related parameter from an AI/ML management service consumer, determining the requested AI/ML energy consumption related parameter for at least one ML entity of AI/ML management service producer, and sending the determined AI/ML energy consumption related parameter to the AI/ML management service consumer.

According to further refinements, these examples may include one or more of the following features:
- the AI/ML energy consumption parameter may be at least one of an AI/ML energy consumption metric or an AI/ML energy consumption profile, wherein AI/ML energy consumption parameter may be related to at least one phase in a lifecycle of an AI/ML entity including a data collection phase, a model training phase, a testing phase and an inference phase;
the AI/ML energy consumption metric may be expressed in a form of numerator / denominator, wherein the numerator may indicate one of a complexity related value indicating a computational complexity of an AI/ML model, an energy consumption related value indicating an energy consumption of an AI/ML model under predefined operation conditions, or an environmental related value indicating a carbon emission when operating an AI/ML model, and the denominator may indicate one of or a combination of per sample, per entire training process, per AI/ML related performance gain, per network KPI gain, per amount of saved energy, or per inference;
- the AI/ML energy consumption metric may be defined per AI/ML capability including a definition of an object or object types for optimization or control, configuration parameters on an object or object types, and network metrics being optimized, and per AI/ML scope indicating a validity range;
- the AI/ML energy consumption metric may be defined per AI/ML entity;
- the AI/ML energy consumption metric may be defined per managed element or managed entity each comprising one or more AI/ML entities;
- the AI/ML energy consumption metric may be defined separately for AI/ML related signaling concerning at least one of transmission of data to be processed by an AI/ML model, or transmission of data comprising an AI/ML model;
- the AI/ML energy consumption metric may be defined according to a requested energy consumption requirement provided from the consumer to the producer;
- the AI/ML energy consumption profile may indicate an expected energy consumption during at least one phase of the lifecycle of an AI/ML entity and may include at least one of an indication of a complexity of the AI/ML entity, an indication of energy consumption of the AI/ML entity when operated under predefined operation conditions, an indication of an alternative energy saving solution based on an AI/ML model, an amount of data required for inference, an amount of data required for model training purposes, an indication of a required periodicity for re-training of the AI/ML entity, an indication of a requirement for data signaling regarding model training purposes;
- at least one of Information on an energy saving strategy being a result of a processing the AI/ML energy consumption related parameter or configuration data for configuring an energy saving strategy may be received from the AI/ML management service consumer, and measures for enabling the energy saving strategy may be executed;
- the energy saving strategy may indicate at least one of a recommendation regarding activation/deactivation of the AI/ML entity, a recommendation regarding switching over towards another AI/ML based solution based on performance or energy consumption, a recommendation regarding switching over towards a less energy demanding solution being different to an AI/ML based solution, a recommendation is derived regarding switching over towards a more energy demanding solution in order to improve performance of AI/ML solution, and a recommendation regarding a scheduling of a re-training of AI/ML entity.

In addition, according to embodiments, there is provided, for example, a computer program product for a computer, including software code portions for performing the steps of the above defined methods, when said product is run on the computer. The computer program product may include a computer-readable medium on which said software code portions are stored. Furthermore, the computer program product may be directly loadable into the internal memory of the computer and/or transmittable via a network by means of at least one of upload, download and push procedures.

### BRIEF DESCRIPTION OF THE DRAWINGS

Some examples of disclosure related to embodiments are described below, by way of example only, with reference to the accompanying drawings, in which:
Fig. 1 shows a diagram illustrating an example of an AI/ML operational workflow;
Fig. 2 shows a diagram illustrating an example of a ML training procedure;
Fig. 3 shows a signaling diagram illustrating a procedure for obtaining and using energy consumption parameters according to some examples of the disclosure;
Fig. 4 shows a flow chart of a processing conducted in an AI/ML MnS consumer entity, according to some examples of the disclosure;
Fig. 5 shows a flow chart of a processing conducted in an AI/ML MnS producer entity, according to some examples of the disclosure;
Fig. 6 shows a diagram of a configuration of an AI/ML MnS consumer entity, according to some examples of the disclosure; and
Fig. 7 shows a diagram of a configuration of an AI/ML MnS producer entity, according to some examples of the disclosure.

### DESCRIPTION OF EMBODIMENTS

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

As a new technology, Al has been developed which offers powerful techniques in various fields, such as signal processing, machine learning and neural networks. Al is being successfully applied in a variety of technologies, services and applications, including telecommunications.

For example, Al and ML techniques are being increasingly employed in 5G system (5GS) and are considered as a key enabler of 5G-Advanced and 6G mobile network generation.

The concepts of NWDAF in 5G core (5GC) and MDAS in OAM are studied in 3GPP as means to bring intelligence and generate analytics by processing management and network data employing AI/ML techniques.

For example, 3GPP specification TS 28.105, Release 17, provides AI/ML management related capabilities and services focusing mainly on the AI/ML training. On the other hand, 3GPP specification TR 28.908, Release 18, aims at use cases, potential requirements, and possible solutions for management of AI/ML capabilities of further AI/ML capabilities such as AI/ML validation, testing, deployment, configuration and performance evaluation.

Furthermore, 3GPP specification TR 28.838, Release 18, describes measurement data collection to support RAN intelligence. Here, it is investigated whether existing management services (e.g., performance assurance, MDT/Trace, QoE) can be reused, or a new management service is needed for the collection of existing or new metrics to be used as input data to AI/ML functions residing in OAM in order to support use cases of mobility optimization, load balancing and network energy saving.

AI/ML techniques have been employed in current networks enabling the learning of systems states and providing the recommendation on the best possible actions based on learned knowledge. Such approach helps in efficient handling of a variety of network use cases, e.g., mobility management, traffic steering, resource optimization, etc.

For example, AI/ML capabilities are being increasingly adopted in mobile networks as a key enabler for wide range of features and functionalities that maximise efficiency and bring intelligence and automation in various domains of the 5GS. For example, these include the Management Data Analytics (MDA) in the management and orchestration, the Network Data Analytics Function in the 5G core network domain, and the like.

For example, AI/ML inference functions in the 5GS use a ML model for inference. In order to enable and facilitate the AI/ML adoption, the ML model needs to be created, trained and then managed during its entire lifecycle.

An ML lifecycle can be broken up into two main parts. One part is the so-called training phase, in which an ML model is created or "trained" by running a specified subset of data into the model and also tested. Another phase is ML inference in which the model is put into action on live data to produce actionable output. The data processing by the ML model is often referred to as "scoring," so one can say that the ML model scores the data, and the output is a score. It is to be noted that also other phases may be considered, such as a deployment phase where the ML model is implemented in an existing system.

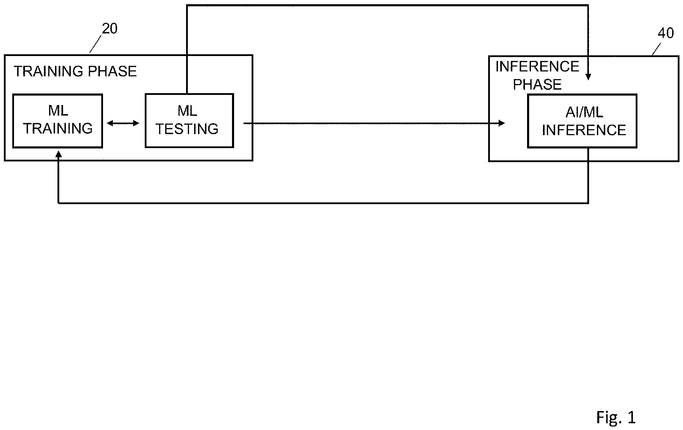

A generic operation workflow of operational steps in the lifecycle of an ML model or entity is depicted in Fig. 1.

As shown in Fig. 1, a workflow involves two phases, i.e. a training phase 20and an inference phase 40. The sequence of the workflow is depicted by arrows in Fig. 1. The main operation tasks in each phase are described in the following.

In the training phase 20, an ML training is conducted. Here, learning by the machine from training data to generate a (new or updated) ML entity that could be used for inference. The ML entity represents an entity that is either an ML model or contains an ML model and ML model related metadata, wherein it can be managed as a single composite entity. An ML model is, for example, a mathematical algorithm that can be "trained" by data and human expert input as examples to replicate a decision an expert would make when provided that same information. For this, ML model training is conducted which is capable to take data, run it through an ML model, derive the associated loss and adjust the parameterization of that ML model based on the computed loss. An ML training function playing the role of an AI/ML training MnS (management service) producer may consume various data for ML training purpose.

The ML training may also include the validation of the generated ML entity to evaluate the performance variance of the ML entity when performing on the training data and validation data. If the validation result does not meet the expectation (e.g., a variance is not acceptable), the ML entity needs to be re-trained. This is the initial step of the workflow.

Another task or phase is ML Testing. Here, the validated ML entity is tested with testing data to evaluate the performance of the trained ML entity for selection for inference. When the performance of the trained ML entity meets the expectations on both training data and validation data, the ML entity is finally tested to evaluate the performance on testing data. If the testing result meets the expectation, the ML entity may be counted as a candidate for use towards the intended use case or task, otherwise the ML entity may need to be further (re)trained. In some cases, the ML entity may need to be verified which is the special case of testing to check whether it works in the AI/ML inference function or the target node. In other cases, the verification step may be skipped, for instance in case the input and output data, data types and formats, have been unchanged from the last ML entity.

In the inference phase, AI/ML inference is done where inference using the ML entity by the inference function is performed.

Each operational step in the workflow as shown in Fig. 1 is supported by a corresponding AI/ML management capability. Management capabilities for the training phase include, for example, an ML training management which allows a consumer to request and/or manage the model training/retraining based on the performance evaluation results observed by model performance monitoring (performance data and/or feedback). For example, if the model performance degrades, the ML performance management capability may trigger the ML training to start re-training. ML testing management is used for allowing the consumer to request the ML entity testing, and to receive the testing results for a trained ML model. In the inference phase, management functions include e.g. AI/ML inference activation/deactivation which allows the consumer to activate/deactivate the inference that uses an ML entity, and AI/ML inference monitoring which allows the consumer to monitor and evaluate the inference performance of an ML entity when used by an AI/ML inference function.

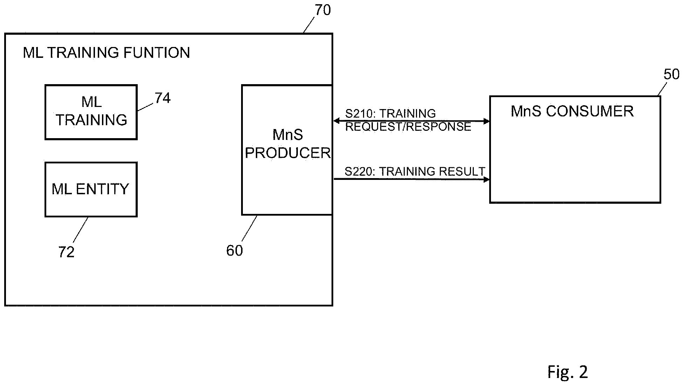

Next, with regard to Fig. 2, an ML training process is depicted which is conducted between an MnS consumer 50 (for example, a network component or network function employing AI/ML based processes, a management function, an operator, or another functional differentiation) and an MnS producer 60 which creates the corresponding ML model/entity. According to examples of embodiments, a MnS consumer is, for example, a communication network element or communication network function, such as a user equipment or terminal device, an access network control element, such as a gNB, a core network element and the like which uses services provided by an AI/ML entity. On the other hand, a MnS producer is represented, for example, by a server computer or network which provides AI/ML entities so as to offer services based on AI/ML solutions.

For example, the ML training is triggered in S210 by a request from one or more ML MnS consumer(s). To trigger an ML training, the MnS consumer 50 requests the MnS producer 60 to train the ML model associated with an ML enabled function. In the ML training request, the consumer can specify, for example, an inference type which indicates the function or purpose of the ML entity, e.g. CoverageProblemAnalysis.

The MnS producer 60 can perform the training according to the designated inference type. The consumer may provide, for example, data source(s) that contain(s) the training data which are considered as input candidates for training. To obtain the valid training outcomes, consumers may also designate requirements for model performance (e.g. accuracy, etc) in the training request.

The MnS producer 60 provides in S210 a response to the MnS consumer 50 indicating whether the request was accepted. If the request is accepted, the MnS producer 60 decides when to start the ML training with consideration of the request(s) from the consumer(s). Once the training is decided, the MnS producer 60 performs the followings.

The MnS producer 60 selects training data, with consideration of the MnS consumer's provided candidate training data. Since the training data directly influences the algorithm and performance of the trained ML entity 72, the MnS producer 60 may examine the MnS consumer's provided training data and decide to select none, some or all of them. In addition, the MnS producer 60 may select some other training data that are available. Then, the MnS producer 60 trains the ML entity 72 using the selected training data with a ML training function 74. After the training, the MnS producer 60 provides in S220 the training results, including the location of the trained ML model or entity, etc., to the MnS consumer(s) 50.

In the example described above, the ML training is initiated by a request from the MnS consumer 50. However, it is also possible that the ML training may be initiated by the MnS producer 60, for example as a result of performance evaluation of the AI/ML model, based on feedback or new training data received from the consumer, or when new training data which are not from the consumer describing the new network status/events become available.

Generally, energy consumption of systems and devices used in the communication network is one of the factors which greatly contribute to network operational expenditures. Thus, the energy consumption of the communication network is an important metric to evaluate the energy efficiency of the solution provided by a network vendor. Importance of optimizing energy consumption has been ever increasing due to global sustainability requirements as well as increasing energy costs. In future the reduction of network energy footprint will be a key factor in adoption of new technologies.

However, AI/ML is envisioned to become ubiquitous capability of systems being employed in all domains and planes of the network on much wider scale than employed today. Periodic retraining of the AI/ML models would be required to achieve best results coping up with the behavior of the system. Given variable level of complexity and system requirements, including energy consumption requirements related to AI/ML-enabled solutions, the pervasive nature of such approach, as well as the need for periodic retraining, opens the question on the impact of AI/ML on the energy consumption as well as how to handle the AI/ML in most energy efficient way.

Aspects of energy consumption of AI/ML solutions have been considered with regard to a calculation of the energy consumption of a specific AI/ML solution wherein the energy needed during one pass-through cycle in neural network from input to output is estimated, so that the energy needed during one cycle of inference, i.e. during the usage of AI can be deduced.

However, when considering the AI/ML energy consumption and the management thereof in current or future cellular networks, it is found out that the following points are relevant.

As a first point, it is necessary to provide suitable means for an AI/ML MnS consumer to indicate requirements on AI/ML-related energy consumption to an AI/ML MnS producer. In this connection, the AI/ML MnS consumer should be able to indicate such requirements for different phases of the AI/ML lifecycle, e.g., training and inference separately.

Furthermore, AI/ML MnS consumer should be able to discover different available/possible AI/ML-based solutions, i.e. with different AI/ML model energy consumption versus achievable performance, for a given use case that can fulfill the indicated requirements from the AI/ML MnS producer. In this case, AI/ML MnS consumer could be enabled to select a most preferred option/model based on an acceptable compromise between AI/ML model energy consumption and performance.

Moreover, the AI/ML MnS consumer has to be able to query energy consumption related parameters, such as specific indicators or a specified profile, for an AI/ML entity from AI/ML MnS producer. That is, the AI/ML MnS Producer requires means being suitable for sharing, for example, energy consumption indicators/profile of an AI/ML entity. This requires a set of quantitative metrics which are suitable and defined for monitoring and measuring actual AI/ML-related energy consumptions on the AI/ML producer side, wherein the AI/ML MnS producer may report results thereon towards one or more AI/ML consumers.

That is, according to respective aspects considered in the present disclosure, means for an AI/ML MnS consumer (e.g. a network operator) are to be provided allowing to control the energy consumption of AI/ML enabled solutions. This comprises, for example, to include metrics and indicators on energy consumption of AI/ML in an (overall or dedicated) energy saving strategy for the communication network, and to perform a tradeoff analysis with respect to energy consumption versus network performance benefits of applying AI/ML based solution. In addition, tradeoff between using AI/ML to reduce overall energy consumption versus energy consumption of AI/ML itself can be made. In a further detailed approach, a tradeoff analysis with respect to energy consumption due to training versus performance increase of the AI/ML based solution, such as accuracy, precision etc., can be considered. As a target of these considerations, an improved AI/ML management can be achieved, for example with regard to decisions/recommendations for AI/ML activation/deactivation, re-training scheduling, AI/ML model quantization, AI/ML model pruning etc., wherein metrics on energy consumption and/or outcome of tradeoff analysis with respect to network performance benefits are considered.

In the following, different exemplifying examples of the disclosure will be described for illustrating controlling or managing the energy consumption in a network where one or more AI/ML based processes are conducted. For this, as one example of a communication network to which examples of the disclosure may be applied, a communication network architecture based on 3GPP standards for a communication network, such as 5G, is assumed as a network architecture, without restricting the disclosure to such an architecture, however. It is obvious for a person skilled in the art that examples of the disclosure may also be applied to other kinds of communication networks, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile adhoc networks (MANETs), wired access, etc.. Furthermore, without loss of generality, the description of some examples of the disclosure is related to a mobile communication network, but principles of the disclosure can be extended and applied to any other type of communication network, such as a wired communication networks as well.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules etc. that have not been specifically mentioned.

A basic system architecture of a (tele)communication network, including a mobile communication system, where some examples of the disclosure are applicable may include an architecture of one or more communication networks including wireless or wired access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit, which controls a respective coverage area or cell(s) and with which one or more communication stations such as user equipments, e.g. user devices or terminal devices, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of the disclosure may also be able to communicate with other networks, such as a public switched telephone network or the Internet, as well as with individual devices or groups of devices being not considered as a part of a network, such as monitoring devices like cameras, sensors, arrays of sensors, and the like. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element or network function, such as one being an AI/ML MnS consumer, or a device or function used by an AI/ML MnS producer, such as a server or the like, as described herein, and any other elements, functions or applications may be implemented by software, e.g. by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

According to examples of embodiments, as described in the following, functions and methods are provided which make it possible to distinguish AI/ML energy consumption in different phases of the AI/ML lifecycle, as well as related to different AI/ML capabilities/scopes and AI/ML related procedures such as needed signalling. Furthermore, a framework for query/exposure of energy consumption requirements, energy optimization solutions, indicators/profiles and metrics between AI/ML consumers and producers is provided. Moreover, measures allowing to apply new energy saving strategies taking into account the network performance benefits and improvements in AI/ML performance are provided.

Specifically, for a method to enhance management service towards collection of parameters related to AI/ML energy consumption, as one energy consumption related parameter, a comparable AI/ML energy consumption metric is defined.

For example, a corresponding metric is expressed in form of (numerator "a" / denominator "b"), i.e. a/b. For example, suitable values for a numerator "a" are:
1) an indication related to a complexity of the AI/ML processing. Such an indication is e.g. an indication of FLOP s, i.e. a number of floating-point operations needed, which is usable to quantify the computational complexity of the algorithm itself e.g., for executing inference without considering a certain architecture of a device performing the operation. A corresponding value enables comparison of complexity of different ML models, for example.
2) an indication related to the energy consumption. For example, quantities indicating an amount of energy needed (energy consumption) like Joule or Watt * s are usable. Here, the respective magnitude of the value can be quantified when detailed knowledge of the used device architecture and associated parameters and number of FLOP to be executed is known. Alternative, an actual measurement can be made. A corresponding value enables a comparison of energy consumption of AI/ML implementations for one specific device architecture and set parameters, for example.
3) an indication of environmental influences, such as a quantity of carbon emission, i.e. an amount of carbon being produced. The respective magnitude of the value can be quantified, for example, when detailed knowledge is present how the used energy was generated, wherein also the amount of consumed energy is to be known.

On the other hand, suitable values for the denominator "b" are, for example:
- per sample (one sample of the batch);
- per entire training process;
- per training epoch;
- per AI/ML related performance gain;
- per network KPI gain;
- per amount of saved energy;
- per inference;
- or combination of the above values.

Depending on the desired information to be obtained from the AI/ML energy consumption metric, the respective numerator "a" and denominator "b" can be selected, either by the ML consumer side or the ML producer side, wherein the respective types of "a" and "b" can be indicated by suitable measures to the other side, e.g. in the form of a predetermined index defining a respective pairing, or the like.

According to examples of embodiments, the AI/ML energy consumption metric is defined per AI/ML capability and scope. That is, for the determination of the AI/ML energy consumption metric, an AI/ML capability, such as an object or object types for which the ML entity can undertake optimization or control, configuration parameters on the stated object or object types, which the ML entity optimizes or controls to achieve the desired outcomes, and network metrics which the ML entity optimizes through its actions are used for the definition. Furthermore, scope information where a respective ML entity has validity may be associated with the AI/ML energy consumption metric. That is, scope information define a validity range of the ML entity, such as a geographic location, a set of objects with respect to which a certain AI/ML capability should be activated, and a time window may be associated with the AI/ML energy consumption metric.

Moreover, according to examples of embodiments, the AI/ML energy consumption metric is defined per AI/ML entity (i.e. an entity that is either an AI/ML model or contains an AI/ML model and that can be managed as a single composite entity).

According to further examples of embodiments, the AI/ML energy consumption metric is defined per ManagedElement or ManagedEntity. In this case, the AI/ML energy consumption metric represents the aggregated energy consumption of all AI/ML entities contained in ManagedElement or ManagedEntity. That is, for example, a managed element or managed entity may comprise one or more ML entities/models to be considered.

Moreover, according to examples of embodiments, the AI/ML energy consumption metric is defined separately for respective phases of the lifecycle, e.g. for training phase and for inference phase. For example, an energy consumption metric during training indicates the energy consumed for the complete training process in order to train the model such that required a training performance (e.g. accuracy) is achieved. This allows also a deduction of expected energy consumption during inference (e.g. complex versus light-weight models). On the other hand, an energy consumption metric during inference indicates the energy consumed by an ML model in the inference phase.

According to examples of embodiments, the AI/ML energy consumption metric is defined separately for AI/ML related signaling. That is, for example, the AI/ML energy consumption metric is defined for the signaling related to collection of new data needed for re-training. Alternatively or additionally, the AI/ML energy consumption metric is defined for the transmission of re-trained/updated model in e.g. an executive form, or a signaling of only gradient updates. In other words, AI/ML signaling refers to transmission of data to be processed by the model, or transmission of data comprising the model as such.

In addition, according to examples of embodiments, the AI/ML energy consumption metric indicates AI/ML energy consumption requirements for different phases of the AI/ML lifecycle, e.g., training and inference, separately towards AI/ML MnS producer. For example, a desired maximum energy consumption of an AI/ML entity is indicated. The AI/ML MnS producer may provide the actual AI/ML energy consumption metrics taking into account the indicated requirements.

That is, according to examples of embodiments, one or more AI/ML energy consumption metrics are defined and provided for the further process which quantify the energy consumed. The AI/ML energy consumption metrics are related, for example, to an AI/ML entity (i.e. any entity that is either an AI/ML model or contains an AI/ML model and that can be managed as a single composite entity), or to ManagedElement or ManagedEntity, in which case the AI/ML energy consumption metric represents the aggregated energy consumption of all AI/ML entities contained in ManagedElement or ManagedEntity.

Furthermore, for the AI/ML energy consumption metrics, AI/ML capability and scope (AI/ML capability: (object, parameter, metric), scope (geo location, set of objects, time window)) may be associated with the energy consumption metric.

The energy consumption can be indicated by different means, e.g. by complexity values (only indirect measure of energy consumption), which are independent of the platform/processor on which the ML model is running, or by consumption values which are in relation to the capabilities of the platform/processor/device on which the ML model is running.

For complexity and consumption values, the following metrics can be applied, for example. As complexity values (i.e. only indirect measure of energy consumption); for example, FLOP, i.e. the number of floating-point operations needed (e.g., per sample, per training epoch, for entire training process, per inference) is applicable. On the other hand, as consumption values, Joule or Watt *s (e.g., per sample, per training epoch, for entire training process, per inference) are applicable. Alternatively or additionally, as consumption values, a quantity of carbon emission (e.g., per sample, per training epoch, for entire training process, per inference) is applicable.

The distinction between complexity and consumption values allows the AI/ML MnS Consumer, for example, to deduce if a particular energy consumption is mainly due to characteristics of the ML model itself (e.g. its complexity) or the capabilities and settings of the platform or device in which the ML model is running (e.g. CPU/GPU availability, number of cores, CPU cycles, clock speed, capability to execute number of FLOP/cycle, etc.). This is useful, for example, when considering that for different hardware sets the usage of the same FLOP may result in different energy consumption. In order to capture this fact and to enable a differentiation, consumption versus complexity values are considered.

While in the part discussed above the /ML energy consumption metric is discussed, according to examples of embodiments, as another (alternative or additional) energy consumption related parameter for the method to enhance management service towards collection of parameters related to AI/ML energy consumption, an AI/ML energy consumption profile is defined as an indication on expected energy consumption during actual data collection, training or inference phase.

According to examples of embodiments, the AI/ML energy consumption profile contains information on AI/ML or on the processes related to AI/ML which contribute a major part to the energy consumption. For example, the AI/ML energy consumption profile provides one or more of the following information.
- an indication regarding the complexity of the ML model (e.g., FLOP per data sample for inference);
- an indication of energy consumption of the model when executed at a specific, reference architecture which is known, along with the information or a description of the reference architecture;
- information on alternative energy saving solutions such as quantized models, pruned models, etc.;
- an amount of data required for inference (e.g., MB per one model output sample);
- an amount of data required for training and/or re-training;
- a periodicity of re-training;
- an indication whether data signaling is necessary due to or after model retraining, for example an indication signaling related to collection of new data needed for re-training is necessary, and indication which measurements (for example, trace, MDT, QoE) are needed for running the model, and an indication whether re-trained/updated model is to be transmitted in e.g. an executive form, or only a signaling of gradient updates is required.

That is, according to examples of embodiments, an AI/ML energy consumption profile is defined which provides a less detailed indication on expected energy consumption of a model, without need to perform actual training or inference phases. According to examples of embodiments, the energy consumption profile includes one or more of the following information.
- Information indicating the complexity of an AI/ML entity or a plurality of AI/ML entities (e.g. all AI/ML entities in a ManagedObject/ManagedElement) are provided, which includes e.g. information on alternative energy saving options such as model quantization options (e.g., 8-bit, 16-bit), model pruning options (e.g., pre-, post-pruning), etc.. For example, this can be indicated in FLOPs or by another suitable value.
- Moreover, an indication of energy consumption of the model when executed at a specific, well-defined reference architecture is provided, along with the information/description of reference architecture.
- Furthermore, information about the amount of data needed for inference, training and re-training is provided. This can be indicated, for example, in memory space in Megabytes.
- Another information is, for example, the size of the AI/ML entity (or of all AI/MLEntities in ManagedObject/ManagedElement)..
- Moreover, a periodicity of re-training, i.e. a period in time between two consecutive trainings, is indicated.
- In addition, it is indicated whether there is a need for data signaling due to or after retraining, such as a signaling related to collection of new data needed for re-training, which measurements (e.g. trace, MDT, QoE) would be needed for running the model, and a transmission of re-trained/updated model in e.g., executive form, or only signaling of gradient updates.

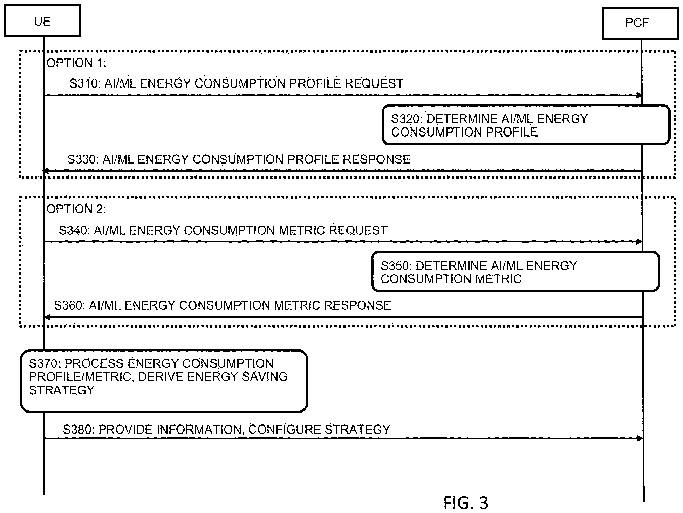

Next, with regard to Fig. 3, a signaling diagram is explained which illustrates an information exchange between AI/ML MnS consumer and AI/ML MnS producer according to embodiments of the invention.

In the example shown in Fig. 3, it is assumed that, as the energy consumption related parameter, both an AI/ML energy consumption profile (defined as option 1) and an AI/ML energy consumption metric (defined as option 2) is exchanged, e.g. when an AI/ML MnS consumer requests both an estimate on energy consumption, i.e., the energy consumption profile, and an actual measured energy consumption i.e., the energy consumption metric. However, as also indicated above, it is also possible that only one of the energy consumption related parameters is exchanged.

In S310, the AI/ML MnS consumer (e.g., network operator) requests from the AI/ML MnS producer (e.g., a vendor) an indication on an estimate of the energy consumption of an offered AI/ML based service or solution, i.e. an AI/ML energy consumption profile. In the request, the AI/ML MnS consumer can indicate various information for the preparation of the AI/ML energy consumption profile by the producer. For example, an ID and/or version of a specific AI/ML entity for which the consumer is interested to receive the energy consumption profile can be indicated. Another possibility is that rather inferenceType indicating the use case/problem to be solved is indicated in the request. The AI/ML MnS consumer can also request the energy consumption profile on a managed object and/or managed element.

In S320, depending on the level of details provided in the request in S310, the AI/ML MnS producer determines the AI/ML energy consumption profile. That is, for example, the AI/ML MnS producer determines an AI/ML energy consumption profile of either a specific AI/ML entity (and its specific version), or it derive AI/ML energy consumption profiles of different available solutions (e.g., different AI/ML entities, their pruned or quantized versions etc.) to tackle the problem corresponding to the requested inferenceType. According to examples of embodiments, the AI/ML MnS producer determines an AI/ML energy consumption profile on the managed object and/or managed element. For example, the determined energy consumption profile includes information as indicated above.

In S330, the AI/ML MnS producer provides the determined AI/ML energy consumption profile(s) derived in S320 to the AI/ML MnS consumer. According to examples of embodiments, this may include different options related to energy consumption versus performance in solving a specific problem indicated by inferenceType, for example.

Now, in S340, as indicated above, in addition to S310 (or alternatively), the AI/ML MnS consumer requests information about the actual energy consumption, i.e. one or more AI/ML energy consumption metrics, for example for a AI/ML entity (and its specific version). As another possibility, the AI/ML energy consumption metric is requested for a specific capability, e.g. indicated via tuple <object, configurable attribute, performance metric>, or for different options (e.g., AI/ML entities, their pruned or quantized versions etc.) tackling a specific problem/inferenceType. Furthermore, according to examples of embodiments, the consumer may request the energy consumption metric related to different phases of the AI/ML entity, i.e., training and inference phases. Moreover, according to examples of embodiments, the AI/ML MnS consumer requests the AI/ML energy consumption metric related to a managed object and/or a managed element. In addition, an indication of a desired maximal energy consumption can be indicated.

In S350, the AI/ML MnS producer determines the requested AI/ML energy consumption metric(s). For example, the AI/ML MnS producer calculates an energy consumption metric based on the information received in the request in S340. For example, the AI/ML MnS producer calculates an energy consumption for training/inference of different options i.e., AI/ML entities (their pruned or quantized versions etc.), that are related to the same inferenceType, or for a single particular AI/ML entity (and its version and capability) or managed object/managed element.

In S360, the AI/ML MnS producer provides the calculated AI/ML energy consumption metrics towards the AI/ML MnS consumer. As described above, the metric may have various formats.

In S370, the AI/ML MnS consumer processes the information received in S330 and S360 (i.e. the AI/ML energy consumption profile and/or the AI/ML energy consumption metrics). That is, according to examples of embodiments of the invention, the AI/ML MnS consumer takes into account the received information on AI/ML energy consumption and derives energy saving strategies accordingly. This is described in further detail below.

Then, in S380, the AI/ML MnS consumer provides information on derived energy saving strategies or configures the derived energy saving strategies at the AI/ML MnS producer. The AI/ML MnS producer can then execute the energy saving strategies accordingly.

As indicated above, in S370, the AI/ML MnS consumer conducts a processing on the basis of the received energy consumption related parameters. Target of the processing is to apply new energy saving strategies taking into account the AI/ML energy consumption parameters.

For example, according to examples of embodiments, the AI/ML MnS consumer takes into account the information on AI/ML energy consumption profile and/or metrics provided for different entities and phases. This information, in conjunction with the information on network performance as well as operator's targets, leads to one or more of the following decisions or results.
- a recommendation is derived regarding an AI/ML activation/deactivation based on the AI/ML energy consumption versus expected or measured (if available) network performance benefits of applying the AI/ML solution;
- a recommendation is derived regarding an AI/ML activation/deactivation based on the AI/ML energy consumption versus expected or measured energy savings due to applying the AI/ML solution;
- a recommendation is derived regarding switching over towards a less energy demanding solution, for example, to a less complex and less performant AI/ML solution with lower energy consumption (like a quantized version of a complex AI/ML model, a pruned version of a complex AI/ML model, or a shallow version of a complex AI/ML model);
- a recommendation is derived regarding switching over towards another, less energy demanding solution, for example, a rule-based non-AI/ML solution. This is preferable, for example, in a case where the current network context does not necessarily require employment of an intelligent solution (e.g., no mobility, low load, no context changes);
- a recommendation is derived regarding switching over towards a more energy demanding solution in order to improve performance of AI/ML solution;
- scheduling of a re-training of the ML model based on energy constraints and AI/ML energy needs is proposed. For example, re-training can be postponed, or the periodicity of model re-training is changed in order to save energy, for example. Furthermore, deferral of re-training is decided, for example the re-training is scheduled for times when cheaper energy becomes available e.g., in off-peak hours, etc.

That is, according to examples of embodiments, in order to enhance management service towards applying new energy saving strategies, the AI/ML consumer, in the processing of the proved information regarding energy consumption related parameters, takes into account the AI/ML energy consumption metrics and profiles, wherein in the new energy saving strategies different tradeoffs can be considered. For example, tradeoffs between network performance benefits of applying AI/ML solution compared to AI/ML energy consumption in order to achieve such benefits are considered. Alternatively or additionally, tradeoffs between an improvement in performance of the AI/ML itself (e.g., accuracy, precision of ML model) compared to energy consumption due to procedures (e.g., data collection, re-training) needed to achieve such improvements are considered.

Thus, according to examples of embodiments, an energy saving strategy derived from the energy consumption related parameters as described above includes, for example, one or more of:
- a recommendation on AI/ML activation/deactivation based on the AI/ML energy consumption versus (expected) network performance benefits of applying AI/ML solution;
- a recommendation on AI/ML activation/deactivation based on the AI/ML energy consumption versus energy savings due to applying AI/ML solution;
- a recommendation on a switch-over towards a less complex AI/ML solution, e.g., from neural network-based solution to decision tree-based solution;
- a recommendation on a switch-over towards a non-AI/ML solution, for example in case the current network context does not necessarily require employment of an intelligent solution (e.g., no mobility, low load such that rather simple, rule-based solutions are sufficient);
- a recommendation on performing quantization-aware AI/ML model training, post-modeling quantization, pre/post-pruning AI/ML models based on the tradeoff between AI/ML energy consumption versus (expected) AI/ML performance.

For improving the ML model management, according to examples of embodiments, when taking into account AI/ML energy consumption metrics or profiles, for example, the scheduling of the ML model re-training can be set or modified, based on energy constraints and AI/ML energy needs. For example, the re-training is postponed, or a lower frequency of model re-training is set in order to save energy. Furthermore, the deferral of re-training is enabled, for example, when (cheaper) energy becomes available e.g., in off-peak hours. Alternatively, or additionally, switching between different versions of quantized models, switching between different versions of pruned models, etc. can be effected.

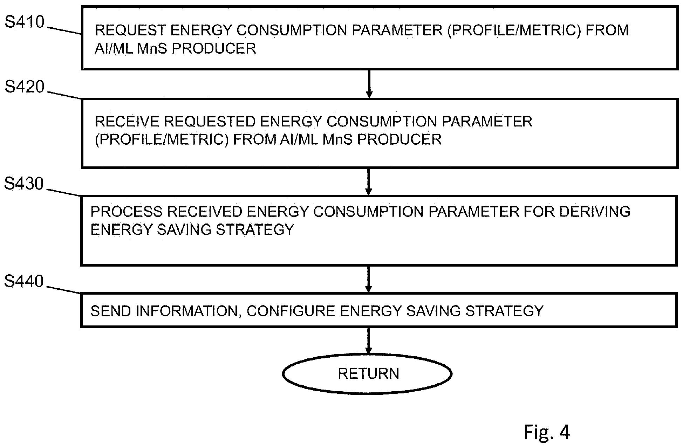

Fig. 4 shows a flow chart of a processing conducted in an AI/ML MnS consumer entity, according to some examples of the disclosure. That is, Fig. 4 shows a flowchart related to a processing conducted by a communication network element or communication network function acting as an AI/ML MnS consumer, such as the MnS consumer of Fig. 3.

In S410, a request is sent to an AI/ML management service producer offering services related to at least one AI/ML entity for obtaining one or more AI/ML energy consumption related parameters.

According to examples of embodiments, the AI/ML energy consumption parameter is an AI/ML energy consumption metric and/or an AI/ML energy consumption profile. The AI/ML energy consumption parameter is related to at least one phase in a lifecycle of an AI/ML entity including a data collection phase, a model training phase, a testing phase and an inference phase.

Moreover, according to some examples of embodiments, the AI/ML energy consumption metric is expressed in a form of numerator / denominator (a/b). For example, the numerator indicates one of a complexity related value indicating a computational complexity of an AI/ML model, an energy consumption related value indicating an energy consumption of an AI/ML model under predefined operation conditions, or an environmental related value indicating a carbon emission when operating an AI/ML model. The denominator indicates, for example, one of per sample, per entire training process, per AI/ML related performance gain, per network KPI gain, per amount of saved energy, or per inference. It is also possible that a combination of the above indicated denominator examples can be used as the final denominator of the AI/ML energy consumption metric.

According to examples of embodiments, the AI/ML energy consumption metric can be defined per AI/ML capability and per AI/ML scope. AI/ML capability includes e.g. a definition of an object or object types for optimization or control, configuration parameters on an object or object types, and network metrics being optimized. AI/ML scope includes e.g. a validity range (geo -location, objects etc.),

Furthermore, according to examples of embodiments, the AI/ML energy consumption metric can be defined per AI/ML entity.

According to examples of embodiments, the AI/ML energy consumption metric can be defined per managed element or managed entity each comprising one or more AI/ML entities.

In addition, according to examples of embodiments, the AI/ML energy consumption metric can be defined separately for AI/ML related signaling concerning at least one of transmission of data to be processed by an AI/ML model (e.g. data required for training of the model), or transmission of data comprising an AI/ML model (i.e. data amount required for transmitting the (re-)trained model).

Moreover, according to examples of embodiments, the AI/ML energy consumption metric can be defined according to a requested energy consumption requirement provided from the consumer to the producer.

On the other hand, according to examples of embodiments, the AI/ML energy consumption profile indicates an expected energy consumption during at least one phase of the lifecycle of an AI/ML entity. The AI/ML energy consumption profile includes, for example, at least one of an indication of a complexity of the AI/ML entity, an indication of energy consumption of the AI/ML entity when operated under predefined operation conditions, an indication of an alternative energy saving solution based on an AI/ML model, an amount of data required for inference, an amount of data required for model training purposes, an indication of a required periodicity for re-training of the AI/ML entity, and an indication of a requirement for data signaling regarding model training purposes.

In S420, in response to the request in S410, the requested AI/ML energy consumption related parameter is received from the AI/ML management service producer.

In S430, the AI/ML energy consumption related parameter is processed for deriving an energy saving strategy considering the AI/ML energy consumption related parameter.

For example, according to examples of embodiments, when processing the AI/ML energy consumption related parameter for deriving the energy saving strategy considering the AI/ML energy consumption related parameter, information related to at least one of network performance or user targets is considered. Then, a decision is made regarding one or more of a recommendation regarding activation/deactivation of the AI/ML entity, a recommendation regarding switching over towards another AI/ML based solution based on performance or energy consumption, a recommendation regarding switching over towards a less energy demanding solution being different to an AI/ML based solution, a recommendation is derived regarding switching over towards a more energy demanding solution in order to improve performance of AI/ML solution, and a recommendation regarding a scheduling of a re-training of AI/ML entity.

Furthermore, according to examples of embodiments, when processing the AI/ML energy consumption related parameter for deriving the energy saving strategy considering the AI/ML energy consumption related parameter, information related to network performance is considered in a tradeoff between an improvement in network performance and an energy consumption when applying the AI/ML entity. Alternatively, according to examples of embodiments, information related to a performance of the AI/ML entity is considered in a tradeoff between AI/ML entity performance improvement and an energy consumption when improving the AI/ML entity.

In S440, a result of the processing the AI/ML energy consumption related parameter for deriving the energy saving strategy and/or configuration data for configuring the energy saving strategy at the AI/ML management service producer are sent to the AI/ML management service producer.

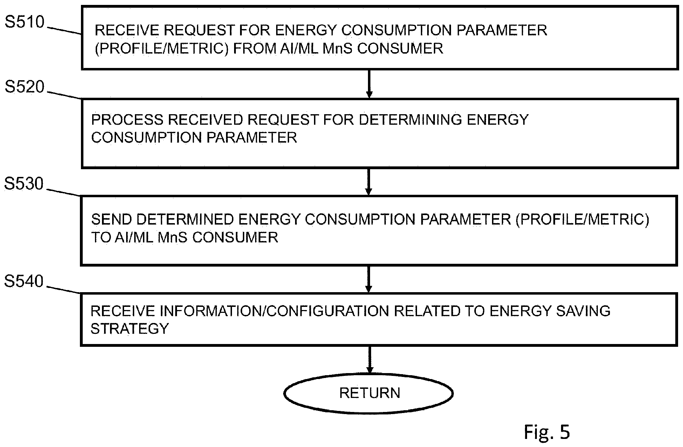

Fig. 5 shows a flow chart of a processing conducted in an AI/ML MnS producer entity, according to some examples of the disclosure. That is, Fig. 5 shows a flowchart related to a processing conducted by a communication network element or communication network function, such as a server, being operated by an AI/ML MnS producer, such as the MnS consumer of Fig. 3.

In S510, a request for an AI/ML energy consumption related parameter is received from an AI/ML management service consumer.

Then, in S520, the requested AI/ML energy consumption related parameter is determined for at least one ML entity of the AI/ML management service producer.

According to examples of embodiments, the AI/ML energy consumption parameter is an AI/ML energy consumption metric and/or an AI/ML energy consumption profile. The AI/ML energy consumption parameter is related to at least one phase in a lifecycle of an AI/ML entity including a data collection phase, a model training phase, a testing phase and an inference phase.

Moreover, according to some examples of embodiments, the AI/ML energy consumption metric is expressed in a form of numerator / denominator (a/b). For example, the numerator indicates one of a complexity related value indicating a computational complexity of an AI/ML model, an energy consumption related value indicating an energy consumption of an AI/ML model under predefined operation conditions, or an environmental related value indicating a carbon emission when operating an AI/ML model. The denominator indicates, for example, one of per sample, per entire training process, per AI/ML related performance gain, per network KPI gain, per amount of saved energy, or per inference. It is also possible that a combination of the above indicated denominator examples can be used as the final denominator of the AI/ML energy consumption metric.

According to examples of embodiments, the AI/ML energy consumption metric can be defined per AI/ML capability and per AI/ML scope. AI/ML capability includes e.g. a definition of an object or object types for optimization or control, configuration parameters on an object or object types, and network metrics being optimized. AI/ML scope includes e.g. a validity range (geo -location, objects etc.),

Furthermore, according to examples of embodiments, the AI/ML energy consumption metric can be defined per AI/ML entity.

According to examples of embodiments, the AI/ML energy consumption metric can be defined per managed element or managed entity each comprising one or more AI/ML entities.

In addition, according to examples of embodiments, the AI/ML energy consumption metric can be defined separately for AI/ML related signaling concerning at least one of transmission of data to be processed by an AI/ML model (e.g. data required for training of the model), or transmission of data comprising an AI/ML model (i.e. data amount required for transmitting the (re-)trained model).

Moreover, according to examples of embodiments, the AI/ML energy consumption metric can be defined according to a requested energy consumption requirement provided from the consumer to the producer.

On the other hand, according to examples of embodiments, the AI/ML energy consumption profile indicates an expected energy consumption during at least one phase of the lifecycle of an AI/ML entity. The AI/ML energy consumption profile includes, for example, at least one of an indication of a complexity of the AI/ML entity, an indication of energy consumption of the AI/ML entity when operated under predefined operation conditions, an indication of an alternative energy saving solution based on an AI/ML model, an amount of data required for inference, an amount of data required for model training purposes, an indication of a required periodicity for re-training of the AI/ML entity, and an indication of a requirement for data signaling regarding model training purposes.

In S530, the determined AI/ML energy consumption related parameter is sent to the AI/ML management service consumer.

Moreover, in S540, at least one of information on an energy saving strategy being a result of a processing the AI/ML energy consumption related parameter or configuration data for configuring an energy saving strategy are received the AI/ML management service consumer. Then, measures for enabling the energy saving strategy are executed.

For example, according to examples of embodiments, the energy saving strategy indicates at least one of a recommendation regarding activation/deactivation of the AI/ML entity, a recommendation regarding switching over towards another AI/ML based solution based on performance or energy consumption, a recommendation regarding switching over towards a less energy demanding solution being different to an AI/ML based solution, a recommendation is derived regarding switching over towards a more energy demanding solution in order to improve performance of AI/ML solution, and a recommendation regarding a scheduling of a re-training of AI/ML entity. According to examples of embodiments, the measures to be executed consider the respective recommendation, for example.

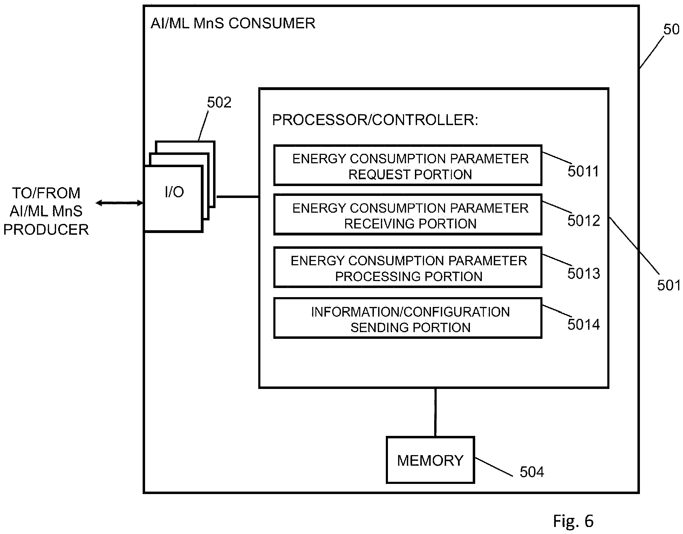

Fig. 6 shows a diagram of a communication network element or communication network function representing a AI/ML MnS consumer, which conducts a control procedure according to some examples of the disclosure, as described in connection with Fig. 3. It is to be noted that the network element or function may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The AI/ML MnS consumer 50 shown in Fig. 6 may include a processing circuitry, a processing function, a control unit or a processor 501, such as a CPU or the like, which is suitable for executing instructions given by programs or the like related to the control procedure. The processor 501 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 502 denotes input/output (I/O) units or functions (interfaces) connected to the processor or processing function 501. The I/O units 502 may be used for communicating with a AI/ML MnS producer, as shown in Fig. 3. The I/O units 502 may be combined units including communication equipment towards several entities, or may include a distributed structure with a plurality of different interfaces for different entities. Reference sign 504 denotes a memory usable, for example, for storing data and programs to be executed by the processor or processing function 501 and/or as a working storage of the processor or processing function 501. It is to be noted that the memory 504 may be implemented by using one or more memory portions of the same or different type of memory.

The processor or processing function 501 is configured to execute processing related to the above described control procedure. In particular, the processor or processing circuitry or function 501 includes one or more of the following sub-portions. Sub-portion 5011 is a processing portion which is usable as a portion for requesting an energy consumption parameter. The portion 5011 may be configured to perform processing according to S410 of Fig. 4. Furthermore, the processor or processing circuitry or function 501 may include a sub-portion 5012 usable as a portion for receiving an energy consumption parameter. The portion 5012 may be configured to perform a processing according to S420 of Fig. 4. In addition, the processor or processing circuitry or function 501 may include a sub-portion 5013 usable as a portion for processing the energy consumption parameter. The portion 5013 may be configured to perform a processing according to S430 of Fig. 4. Moreover, the processor or processing circuitry or function 501 may include a sub-portion 5014 usable as a portion for sending information or a configuration. The portion 5014 may be configured to perform a processing according to S440 of Fig. 4.

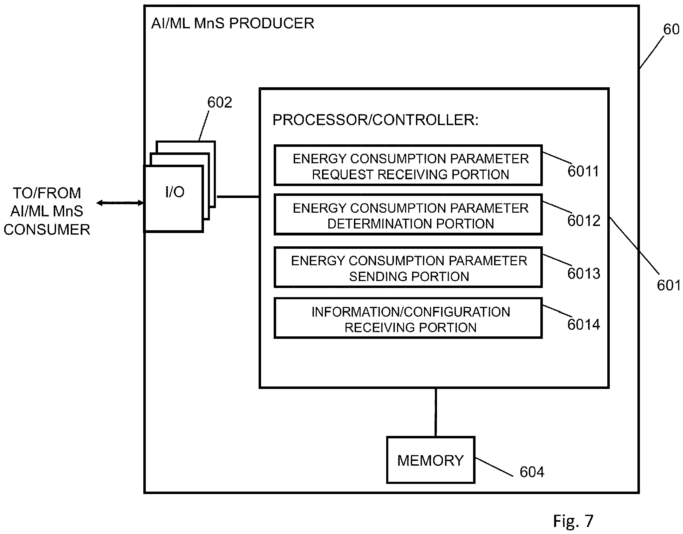

Fig. 7 shows a diagram of a communication network element or communication network function representing a AI/ML MnS producer, which conducts a control procedure according to some examples of the disclosure, as described in connection with Fig. 3. It is to be noted that the network element or function may include further elements or functions besides those described herein below. Furthermore, even though reference is made to a network element or function, the element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The AI/ML MnS producer 60 shown in Fig. 7 may include a processing circuitry, a processing function, a control unit or a processor 601, such as a CPU or the like, which is suitable for executing instructions given by programs or the like related to the control procedure. The processor 601 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference sign 602 denotes input/output (I/O) units or functions (interfaces) connected to the processor or processing function 601. The I/O units 602 may be used for communicating with an AI/ML MnS consumer, as shown in Fig. 3. The I/O units 602 may be combined units including communication equipment towards several entities, or may include a distributed structure with a plurality of different interfaces for different entities. Reference sign 604 denotes a memory usable, for example, for storing data and programs to be executed by the processor or processing function 601 and/or as a working storage of the processor or processing function 601. It is to be noted that the memory 604 may be implemented by using one or more memory portions of the same or different type of memory.

The processor or processing function 601 is configured to execute processing related to the above described control procedure. In particular, the processor or processing circuitry or function 601 includes one or more of the following sub-portions. Sub-portion 6011 is a processing portion which is usable as a portion for receiving a request for an energy consumption parameter. The portion 6011 may be configured to perform processing according to S510 of Fig. 5. Furthermore, the processor or processing circuitry or function 601 may include a sub-portion 6012 usable as a portion for determining an energy consumption parameter. The portion 6012 may be configured to perform a processing according to S520 of Fig. 5. In addition, the processor or processing circuitry or function 601 may include a sub-portion 6013 usable as a portion for sending the determined energy consumption parameter. The portion 6013 may be configured to perform a processing according to S530 of Fig. 5. Moreover, the processor or processing circuitry or function 601 may include a sub-portion 6014 usable as a portion for receiving information or a configuration. The portion 6014 may be configured to perform a processing according to S540 of Fig. 5.

As indicated above, examples of embodiments are applicable to communication networks according to 3GPP standards. Corresponding specifications of the 3GPP standard, which are impacted by aspects of embodiments, are for example TR 28.838 and corresponding TS 28.552, as well as TR 28.908 and corresponding TS 28.105 as well as TS 28.104.

For example, the following changes are related to 3GPP specification TS 28.552 as part of MEDACO_RAN work item (TR 28.838). In detail, in chapter 5.1.1.19 "Power, Energy and Environmental (PEE) measurements", the following supplements can be made:
5.1.1.19.x1 ML Training Energy consumption
   a) This measurement provides the energy consumed by a ML entity contained in a ManagedElement.
   b) SI.
   c) This measurement is obtained by measuring the FLOPs taken to perform the ML training at the ML entity. This can also be measured by measuring the energy consumed in Joules for the complete training process at the ManagedElement.
   d) An integer value in the units of FLOPs (or) a real value in the units of Joules (or kWh).
   e) The measurement name has the form PEE.MLTrainingEnergyConsumption.
   f) ManagedElement
   g) Valid for packet switching.
   h) 5GS.
5.1.1.19.x2 ML Inference Energy consumption
   a) This measurement provides the energy consumed by a ML entity contained in a ManagedElement.
   b) SI.
   c) This measurement is obtained by measuring the FLOPs taken to perform one ML inference at the ML entity. This can also be performed by measuring the energy consumed in Joules for the one inference action at the MLEntity contained in the ManagedElement.
   d) An integer value in the units of FLOPs (or) a real value in the units of Joules (or kWh).
   e) The measurement name has the form PEE.MLInferenceEnergyConsumption.
   f) ManagedElement
   g) Valid for packet switching.
   h) 5GS.

Furthermore, the following entries can be made for TR 28.908 as part of AI/ML Study item:

### 5.17 Trustworthy Machine Learning

### 5.17.1 Description

During ML training, testing and inference, the AI/ML trustworthiness management is needed. Based on the risk level (e.g., unacceptable, high, minimal) of the use case, the trustworthiness requirements for ML training, testing and inference may vary and therefore the related trustworthiness mechanisms need to be configured and monitored. The purpose of AI/ML trustworthiness is to ensure that the model being trained, tested, and deployed is explainable, fair and robust.

Note: In the context of SA5, explainability of a model refers to explaining individual decisions predicted by the model and not explaining the internal behavior of the model itself.

The EU has proposed an AI regulation act for AI/ML consisting of several key requirements that the AI/ML systems should meet (based on the risk level of the use case) for them to be considered trustworthy [10]. These requirements include human agency and oversight, technical robustness and safety, privacy and data governance, transparency, diversity, non-discrimination and fairness, accountability, societal and **"environmental well-being".** More details on each of these seven requirements are described in [11]. Furthermore, ISO/IEC analyses the factors that can impact the trustworthiness of systems providing or using AI and possible approaches or requirements to improving their trustworthiness that can be used by any business regardless of its size or sector [12].

Three well known categories under the umbrella of Trustworthy Machine Learning are as follows:
**Explainable Machine Learning:** Explainability in machine learning refers to the ability of ML models to enable humans to understand decisions or predictions made by them.
**Fair Machine Learning:** Fairness in machine learning refers to the process of correcting and eliminating bias in machine learning models.
**Robust Machine Learning:** Robustness in machine learning refers to the process of handling various forms of errors/corruptions in machine learning models as well as changes in the underlying data distribution in an automatic way.
**Energy-efficient Machine Learning:** Energy efficiency in machine learning refers to the ability of developing and deploying ML models with low computational and power consumption, without significantly harming the prediction accuracy of ML models.

These features apply to the four aspects of the ML process:
- Data processing for use towards training, testing and inference,
- The training of ML entities,
- The testing of ML entities,
- The use of ML entities for inference.

### 5.17.2 Use cases

### 5.17.2.1 AI/ML trustworthiness indicators

The AI/ML trustworthiness indicators related to AI/ML training, testing and inference need to be precisely defined. The indicators mainly include three aspects:

Explainability-related indicators: the explainability indicators of the ML entity. For example, the AI/ML MnS consumer may indicate the AI/ML MnS producer to:
- provide local explanation for one particular instance predicted by the ML entity without disclosing the ML entity internals.
- provide global explanation for a group of instances predicted by the ML entity without disclosing the ML entity internals.
- evaluate monotonicity - a quantitative metric for explainability - that measures the effect of individual features on ML entity performance by evaluating the effect on ML entity performance by incrementally adding each feature in order of increasing importance.

Fairness-related indicators: the fairness indicators of the data or the ML entity. For example, the AI/ML MnS consumer may indicate the AI/ML MnS producer to:
- evaluate disparate impact - a quantitative measure for fairness - that measures the ratio of rate of favorable outcome for the unprivileged group to that of the privileged group.
- evaluate Manhattan distance - a quantitative measure for fairness - that measures the average distance between the samples from two datasets.
- evaluate average odds difference - a quantitative measure for fairness - that measures the average difference of false positive rate and true positive rate between unprivileged and privileged groups.

Robustness-related indicators: the robustness indicators of the data or the ML entity. For example, the AI/ML MnS consumer may indicate the AI/ML MnS producer to:
- evaluate missingness ratio - a quantitative measure for robustness - that measures the percentage of missing values in the training dataset.

Energy-related indicators: the energy consumption indicators of the ML entity. For example, the AI/ML MnS consumer may indicate the AI/ML MnS producer to evaluate:
- Complexity indication - FLOP - number of floating-point operations needed - quantifies the computational complexity of the an algorithm itself e.g. for executing inference without considering a certain architecture of a device performing the operation - enables comparison of complexity of different models
- Energy consumption - Joule or Watt * s - amount of energy needed (energy consumption) - can only be quantified in detailed knowledge of the used device architecture and associated parameters and number of FLOP to be executed or by actual measurement - enables comparison of energy consumption of AI/ML implementations for one specific device architecture and set parameters.
- Quantity of carbon emission - amount of carbon produced - can only be quantified in knowledge how the used energy was generated and the amount of consumed energy

Depending on the use case, some or all trustworthiness indicators can be selected for monitoring and evaluation. The AI/ML MnS consumer should first determine which indicators are needed and then request the AI/ML MnS producer to monitor and evaluate the requested indicators.

### 5.17.2.3 ML training trustworthiness

The ML training may need to be performed according to the desired trustworthiness measure of the ML model. For example,
- The ML model can be trained to generate explanations for the predictions.
- The ML model can be trained to detect and mitigate biased outcomes.
- The ML model can be trained to perform well on unseen or missing data.
- The ML model can be trained together with adversarial input samples so that the trained model can detect adversaries.
- The ML model can be trained using quantization techniques (known as quantization-aware training) which reduces the precision of model parameters from float to lower precision such as int8 thereby resulting in efficient computation and in turn reduced energy consumption.

Depending on the use case, one or more training trustworthiness techniques can be applied during training the ML model. Therefore, the ML training producer can be queried to provide information on the supported training trustworthiness capabilities enabling the ML training MnS consumer to request for a subset of supported training trustworthiness characteristics to be configured, measured, and reported.

### 5.17.2.4 AI/ML inference trustworthiness

The AI/ML inference may need to be performed according to the desired trustworthiness measure of the ML model. For example,
- Post-processing explanations can be generated based on one or multiple inferences generated by the ML model.
   - The ML model can be trained to flip biased outcomes during inference using post-processing fairness techniques, for e.g., based on confidence value of a prediction.
   - The ML model can be trained to infer well on unseen or missing inference data.
   - Perturbing model predictions to obfuscate labels/confidence information to protect them from model inversion or model extraction attacks.
   - The trained ML model can be compressed to reduce the model size without compromising too much on the accuracy. This in turn results in reduced energy consumption during the inference time. Pruning is one of the powerful techniques to reduce the number of parameters by removing redundant parameters that do not contribute much during training from the already trained ML model.

Depending on the use case, one or more inference trustworthiness techniques can be applied on the deployed ML model. Therefore, the AI/ML inference producer can be queried to provide information on the supported inference trustworthiness capabilities enabling the AI/ML inference consumer to request for a subset of supported inference trustworthiness characteristics to be configured, measured, and reported.

### 5.17.3 Potential requirements

**REQ-ML TRAIN_TRUST-10** The ML training MnS producer should support a capability to enable an authorized MnS consumer to request reporting on the supported energy-efficient training capabilities of an ML entity.

**REQ-ML TRAIN_TRUST-11** The ML training MnS producer should have a capability to train a specific ML entity using energy-efficient techniques (e.g., quantization-aware training) as defined by the MnS consumer.

**REQ-ML TRAIN_TRUST-12** The ML training MnS producer should support a capability to enable an authorized MnS consumer to define the reporting characteristics related to the energy-efficient training reports of an ML entity.

**REQ-ML_INF_TRUST-7** The provider of AI/ML inference should have a capability to infer using a specific ML entity trained and tested with energy-efficient techniques as defined by the MnS consumer.

**REQ-ML_INF_TRUST-8** The provider of AI/ML inference should support a capability for an authorized MnS consumer to define the reporting characteristics related to the energy-efficient inference reports of an ML entity.

### 5.17.4 Possible solutions

### AIML trustworthiness indicators

This solution introduces a new data type *modelTrustworthiness* to specify the trustworthiness of an AI/ML entity. This data type includes the following attributes:
- *trustworthinessType* indicates the type of trustworthiness metric, e.g., explainability, fairness, robustness, energy, *qualityOfTrustworthiness* covering several trustworthiness metrics.
- *trustworthinessMetric* indicates one or more trustworthiness metric(s) used to evaluate the trustworthiness of an AI/MLML entity, e.g., monotonicity for explainability, disparate impact for fairness, missingness ratio for robustness, energy consumption or carbon emission for energy.
- *trustworthinessScore* indicates the trustworthiness corresponding to the *trustworthinessMetric.*

The *qualityOfTrustworthiness* data type includes the following attributes:
- *explainability* indicating low, medium, or high.
- *fairness* indicating low, medium, or high.
- *robustness* indicating low, medium, or high.
- *energy* indicating low, medium, or high.

### Discover supported trustworthiness indicators

- This solution extends the modelTrustworthiness data type to include a new attribute of datatype *SupportedMITrainingTrustworthiness* and *SupportedMIInferenceTrustworthiness* indicating on the ML training and ML inference trustworthiness indicators that can be supported by an *AIMLEntity.* This extended modelTrustworthiness data type can be used to activate the notification on specific ML training and ML inference trustworthiness indicators based on the request by the authorized consumer.
- *SupportedMITrainingTrustworthiness* «dataType» specifies the training trustworthiness indicator(s), e.g., explainability indicators, fairness indicators, robustness indicators, energy indicators, which can be supported by an AI/ML entity. It contains the tuples of *supportedTrainingTrustworthinessMetric* and *activatedTrainingTrustworthinessMetric* attributes.
- *SupportedMIInferenceTrustworthiness* «dataType» specifies the inference trustworthiness indicator(s), e.g., explainability indicators, fairness indicators, robustness indicators, energy indicators, which can be supported by an AI/ML entity. It contains the tuples of *supportedInferenceTrustworthinessMetric* and *activatedInferenceTrustworthinessMetric* attributes.
- The *supportedTrainingTrustworthinessMetric* indicates training trustworthiness metrics (including energy efficiency metrics) that an AIML entity is capable of providing. The authorized consumer shall be notified only on a specific subset of such training trustworthiness metrics for which the *activatedTrainingTrustworthinessMetric* indicator is set.
- The *supportedInferenceTrustworthinessMetric* indicates inference trustworthiness metrics that an AIML entity is capable of providing (including energy efficiency metrics). The authorized consumer shall be notified only on a specific subset of such inference trustworthiness metrics for which the *activatedInferenceTrustworthinessMetric* indicator is set.

### Request and report trustworthiness indicators

- This solution extends the *MLTrainingRequest* IOC by adding two new attributes, e.g., *trainingTrustworthinessRequirements* and *inferenceTrustworthinessRequirements,* to allow the AI/ML entity MnS consumer to request the AI/ML entity MnS producer to train and deploy the AI/ML model with specified training and inference trustworthiness requirements (including energy consumption requirements). Similarly, the *MLTrainingReport* IOC also needs to be extended with two new attributes, e.g., *trainingTrustworthiness* and *inferenceTrustworthiness,* to allow the AI/ML entity MnS producer to report the achieved training and inference trustworthiness score (including energy efficiency score) on the AI/ML model.
- The newly introduced attributes *trainingTrustworthinessRequirements, inferenceTrustworthinessRequirements, trainingTrustworthiness* and *inferenceTrustworthiness* are of data type modelTrustworthiness.

Moreover, the following changes are related to 3GPP specification TR 28.908 building on the use case of AI/ML performance evaluation.

### 5.1.2.x AI/ML energy consumption measurements

Apart from measuring the performance aspects of AI/ML entities in different phases including training and inference phases, it is required to measure the energy consumption of AI/ML entities at different phases. It is required to define the energy consumption information that may be used to quantify the energy performance of any AI/ML entity. The ML MnS consumer may request the energy consumption information from the ML MnS producer. The ML MnS consumer may then use this information to decide on various optimization or network planning actions. These include switching on/off ML capability at the ML MnS producer, recommending the ML MnS producer to switch to less complex AI/ML version for a given ML entity, scheduling the ML model re-training based on the energy constraints and AI/ML energy needs, e.g., postpone the re-training or lower the frequency of model re-training in order to save energy.

### 5.1.3 Potential requirements

**REQ-AI/ML_ENER-CON-1:** The 3GPP management system shall have a capability for an authorized MnS consumer (e.g., an operator) to request for energy consumption metrics for one or more ML entities.

**REQ-AI/ML_ENER-CON-1:** The 3GPP management system shall have a capability for an authorized MnS producer (e.g., a vendor) to provide energy consumption metrics for one or more ML entities.

In addition, the following changes are related to 3GPP specification TS 28.104. As a further analytics output for energy saving analysis, an information element energySavingRecommendations is provided which is defined for energy saving on UPFs. It contains a set of:
- Recommended UPF (ES-UPF) to conduct energy saving.
- Recommended candidate UPFs with precedence for taking over the traffic of the ES-UPF.
- The time to conduct energy saving for the ES-UPF.
- Recommendation to activate/deactivate ML entities
- Recommendation to switch to less/more complex ML entities

As described above, according to measures discussed in examples of embodiments, it is possible to provide energy consumption related parameters which allow to make a distinction among energy consumption during training and during inference. On the basis of this, besides energy consumption of network functions during operation of the NF, for AI/ML enabled functions, the energy consumption for inference and for training is considered. In other words, the energy consumption related parameters defined in examples of embodiments capture the energy consumed for the entire operation for which the NF is meant for. That is, the proposed metrics allow to capture the energy consumed for the regular business activities of the NF along with all the AI/ML related activities (training, re-training, inference).

Furthermore, by using the proposed energy consumption related metric and profile for AI/ML enabled NFs, it becomes possible to make a more informed selection of different AI/ML inference functions (models) considering also the performance/energy consumption trade-off.

In addition, a model selection is possible without requiring a full knowledge of the final application hardware, since it is possible with the above described measures to compare a complexity level (e.g. based on FLOPs) or to use a pre-defined or standardized hardware model for comparison purposes.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operation environment may be used in connection with examples of embodiments of the disclosure based on the principles defined.

According to a further example of embodiments, there is provided, for example, an apparatus for use by a communication network element or communication network function acting as an artificial intelligence, Al, machine learning, ML, management service consumer, the apparatus comprising means configured to request an AI/ML energy consumption related parameter from an AI/ML management service producer offering services related to at least one AI/ML entity, means configured to receive, from the AI/ML management service producer, the requested AI/ML energy consumption related parameter, and means configured to process the AI/ML energy consumption related parameter for deriving an energy saving strategy considering the AI/ML energy consumption related parameter.

Furthermore, according to some other examples of embodiments, the above defined apparatus may further comprise means for conducting at least one of the processing defined in the above described methods, for example a method according to that described in connection with Fig. 4.

According to a further example of embodiments, there is provided, for example, an apparatus for use by a communication network element or communication network function acting as an artificial intelligence, Al, machine learning, ML, management service producer, the apparatus comprising means configured to receive a request for an AI/ML energy consumption related parameter from an AI/ML management service consumer, means configured to determine the requested AI/ML energy consumption related parameter for at least one ML entity of AI/ML management service producer, and means configured to send the determined AI/ML energy consumption related parameter to the AI/ML management service consumer.

Furthermore, according to some other examples of embodiments, the above defined apparatus may further comprise means for conducting at least one of the processing defined in the above described methods, for example a method according to that described in connection with Fig. 5.

According to a further example of embodiments, there is provided, for example, a non-transitory computer readable medium comprising program instructions for causing an apparatus to perform, when used in a communication network element or communication network function acting as an artificial intelligence, Al, machine learning, ML, management service consumer, a processing comprising requesting an AI/ML energy consumption related parameter from an AI/ML management service producer offering services related to at least one AI/ML entity, receiving, from the AI/ML management service producer, the requested AI/ML energy consumption related parameter, and processing the AI/ML energy consumption related parameter for deriving an energy saving strategy considering the AI/ML energy consumption related parameter.

According to a further example of embodiments, there is provided, for example, a non-transitory computer readable medium comprising program instructions for causing an apparatus to perform, when used in a communication network element or communication network function acting as an artificial intelligence, Al, machine learning, ML, management service producer, a processing comprising receiving a request for an AI/ML energy consumption related parameter from an AI/ML management service consumer, determining the requested AI/ML energy consumption related parameter for at least one ML entity of AI/ML management service producer, and sending the determined AI/ML energy consumption related parameter to the AI/ML management service consumer.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, Bluetooth, Infrared, and the like may be used; additionally, embodiments may also apply wired technologies, e.g. IP based access technologies like cable networks or fixed lines.
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, including a computer usable medium having a computer readable program code embodied therein, the computer readable program code adapted to execute a process as described in embodiments, wherein the computer usable medium may be a non-transitory medium.

Although the present disclosure has been described herein before with reference to particular embodiments thereof, the present disclosure is not limited thereto and various modifications can be made thereto.

## Claims

1. An apparatus for use by a communication network element or communication network function acting as an artificial intelligence, Al, machine learning, ML, management service consumer, the apparatus comprising
at least one processing circuitry, and
at least one memory for storing instructions that, when executed by the at least one processor, cause the apparatus at least
to request an AI/ML energy consumption related parameter from an AI/ML management service producer offering services related to at least one AI/ML entity,
to receive, from the AI/ML management service producer, the requested AI/ML energy consumption related parameter, and
to process the AI/ML energy consumption related parameter for deriving an energy saving strategy considering the AI/ML energy consumption related parameter.

2. The apparatus according to claim 1, wherein the AI/ML energy consumption parameter is at least one of
an AI/ML energy consumption metric or
an AI/ML energy consumption profile,
wherein AI/ML energy consumption parameter is related to at least one phase in a lifecycle of an AI/ML entity including a data collection phase, a model training phase, a testing phase and an inference phase.

3. The apparatus according to claim 2, wherein the AI/ML energy consumption metric is expressed in a form of numerator / denominator, wherein
the numerator indicates one of
a complexity related value indicating a computational complexity of an AI/ML model,
an energy consumption related value indicating an energy consumption of an AI/ML model under predefined operation conditions, or
an environmental related value indicating a carbon emission when operating an AI/ML model, and
the denominator indicates one of or a combination of
per sample,
per entire training process,
per AI/ML related performance gain,
per network KPI gain,
per amount of saved energy, or
per inference.

4. The apparatus according to claim 2 or 3, wherein the AI/ML energy consumption metric is defined per Al/ML capability including a definition of an object or object types for optimization or control, configuration parameters on an object or object types, and network metrics being optimized, and per AI/ML scope indicating a validity range.

5. The apparatus according to any of claims 2 to 4, wherein the AI/ML energy consumption metric is defined per AI/ML entity.

6. The apparatus according to any of claims 2 to 5, wherein the AI/ML energy consumption metric is defined per managed element or managed entity each comprising one or more AI/ML entities.

7. The apparatus according to any of claims 2 to 6, wherein the AI/ML energy consumption metric is defined separately for AI/ML related signaling concerning at least one of transmission of data to be processed by an AI/ML model, or transmission of data comprising an AI/ML model.

8. The apparatus according to any of claims 2 to 7, wherein the AI/ML energy consumption metric is defined according to a requested energy consumption requirement provided from the consumer to the producer.

9. The apparatus according to any of claims 2 to 8, wherein the AI/ML energy consumption profile indicates an expected energy consumption during at least one phase of the lifecycle of an AI/ML entity and includes at least one of
an indication of a complexity of the AI/ML entity,
an indication of energy consumption of the AI/ML entity when operated under predefined operation conditions,
an indication of an alternative energy saving solution based on an AI/ML model,
an amount of data required for inference,
an amount of data required for model training purposes,
an indication of a required periodicity for re-training of the AI/ML entity,
an indication of a requirement for data signaling regarding model training purposes.

10. The apparatus according to any of claims 1 to 9, wherein the instructions further cause the apparatus
when processing the AI/ML energy consumption related parameter for deriving the energy saving strategy considering the AI/ML energy consumption related parameter, to consider information related to at least one of network performance or user targets,
to decide on at least one of
a recommendation regarding activation/deactivation of the AI/ML entity,
a recommendation regarding switching over towards another AI/ML based solution based on performance or energy consumption,
a recommendation regarding switching over towards a less energy demanding solution being different to an AI/ML based solution,
a recommendation is derived regarding switching over towards a more energy demanding solution in order to improve performance of AI/ML solution, and
a recommendation regarding a scheduling of a re-training of AI/ML entity.

11. The apparatus according to claim 10, wherein the instructions further cause the apparatus
when processing the AI/ML energy consumption related parameter for deriving the energy saving strategy considering the AI/ML energy consumption related parameter, to consider information related to network performance in a tradeoff between an improvement in network performance and an energy consumption when applying the AI/ML entity, or to consider information related to a performance of the AI/ML entity in a tradeoff between AI/ML entity performance improvement and an energy consumption when improving the AI/ML entity.

12. The apparatus according to any of claims 1 to 11, wherein the instructions further cause the apparatus to send, to the AI/ML management service producer, at least one of
a result of the processing the AI/ML energy consumption related parameter for deriving the energy saving strategy or
configuration data for configuring the energy saving strategy at the AI/ML management service producer.

13. An apparatus for use by a communication network element or communication network function acting as an artificial intelligence, Al, machine learning, ML, management service producer, the apparatus comprising
at least one processing circuitry, and
at least one memory for storing instructions that, when executed by the at least one processor, cause the apparatus at least
to receive a request for an AI/ML energy consumption related parameter from an AI/ML management service consumer,
to determine the requested AI/ML energy consumption related parameter for at least one ML entity of AI/ML management service producer, and
to send the determined AI/ML energy consumption related parameter to the AI/ML management service consumer.

14. The apparatus according to claim 13, wherein the AI/ML energy consumption parameter is at least one of
an AI/ML energy consumption metric or
an AI/ML energy consumption profile,
wherein AI/ML energy consumption parameter is related to at least one phase in a lifecycle of an AI/ML entity including a data collection phase, a model training phase, a testing phase and an inference phase.

15. The apparatus according to claim 14, wherein the AI/ML energy consumption metric is expressed in a form of numerator / denominator, wherein
the numerator indicates one of
a complexity related value indicating a computational complexity of an AI/ML model,
an energy consumption related value indicating an energy consumption of an AI/ML model under predefined operation conditions, or
an environmental related value indicating a carbon emission when operating an AI/ML model, and
the denominator indicates one of or a combination of
per sample,
per entire training process,
per AI/ML related performance gain,
per network KPI gain,
per amount of saved energy, or
per inference.
